# EUROPEAN PATENT APPLICATION

(11) **EP 4 273 797 A1**
(43) Date of publication of application: **08.11.2023**
(21) Application number: 22305668.0
(22) Date of filing: 04.05.2022
(51) Int. Cl.: G06T 7/00, G06T 7/62, G06T 7/12

(54) **VISUAL INSPECTION SYSTEM FOR A MEDICAL DEVICE**

(71) Applicant: Becton Dickinson France, 38800 Le Pont-de-Claix (FR)
(72) Inventor: GODARD, Baptiste, 38100 Grenoble (FR); ROCH, Quentin, 38610 Gieres (FR)
(74) Representative: Germain Maureau

(57) **Abstract**

A visual inspection system (600) for a medical device(502), such as a syringe, that includes an image capture device (104), a structure (402) configured to hold a tube (502), e.g. a barrel of a syringe, for inspection, and at least one processor (102) that may cause an image of the tube to be captured via the image capture device when the tube is positioned in the structure, wherein the image includes an image of a flange (510) of the tube superimposed on a background (404), wherein the background includes a first color and a second color. The processor may determine a measurement of an attribute of the flange of the tube and provide data associated with the measurement of an attribute of the flange of the tube.

## Description

### BACKGROUND

Machine vision (MV) may refer to technology used to provide imaging-based automatic inspection and/or analysis for industrial applications, such as automatic inspection, process control, and/or robot guidance. Machine vision may include functions in industrial automation environments but may also include functions in other environments, such as security and vehicle guidance. An overall machine vision process may include planning the details of requirements for a project and then creating a solution. During run-time, a machine vision process may start with an imaging process, followed by automated analysis of an image, and then extraction of required information from the automated analysis.

However, in certain situations, an imaging process may fail to provide an image which is viable for extracting information from an image. For example, an image of a medical device, such as a syringe or other container, may include a background that does not allow for accurate detection of particular aspects of the medical device from the image.

### SUMMARY

Accordingly, provided are improved systems, devices, products, apparatus, and/or methods for inspecting a flange and/or internal diameter of a medical device.

Further non-limiting embodiments or aspects are set forth in the following numbered clauses:
Clause 1: A method for inspecting aspects of a medical device comprising: causing, with at least one processor, an image of a tube to be captured via an image capture device, wherein the image comprises an image of a flange of the tube superimposed on a background, wherein the background comprises a first color and a second color; determining, with at least one processor, a measurement of an attribute of the flange of the tube; and providing, with at least one processor, data associated with the measurement of an attribute of the flange of the tube.
Clause 2: The method of clause 1, further comprising: performing an edge detection procedure on the image of the flange of the tube to provide a defined edge of the flange of the tube; wherein determining the measurement of the attribute of the flange of the tube comprises: determining the measurement of the attribute of the flange of the tube based on the defined edge of the flange of the tube.
Clause 3: The method of clause 1 or 2, further comprising: positioning the tube within a structure, wherein a surface of the structure comprises the first color and the second color.
Clause 4: The method of any of clauses 1-3, wherein the structure comprises a first component and a second component, and wherein the structure is configured to hold the tube between the first component and the second component.
Clause 5: The method of any of clauses 1-4, further comprising: causing light to illuminate the tube via at least one light source prior to causing the image of the tube to be captured via an image capture device, wherein the at least one light source comprises a spot light and a ring light.
Clause 6: The method of any of clauses 1-5, wherein the first color of the background is white and wherein the second color of the background is black.
Clause 7: The method of any of clauses 1-6, wherein the tube is a syringe.
Clause 8: A system for inspecting aspects of a medical device, comprising: a structure configured to a hold a tube for inspection; and at least one processor programmed or configured to: cause an image of a tube to be captured via an image capture device when the tube is positioned in the structure, wherein the image comprises an image of a flange of the tube superimposed on a background, wherein the background comprises a first color and a second color; determine a measurement of an attribute of the flange of the tube; and provide data associated with the measurement of an attribute of the flange of the tube.
Clause 9: The system of clause 8, further comprising: at least one light source, wherein the at least one light source is configured to illuminate the flange of the tube.
Clause 10: The system of clause 8 or 9, wherein the at least one processor is further programmed or configured to: perform an edge detection procedure on the image of the flange of the tube to provide a defined edge of the flange of the tube; wherein, when determining the measurement of the attribute of the flange of the tube, the at least one processor is programmed or configured to: determine the measurement of the attribute of the flange of the tube based on the defined edge of the flange of the tube.
Clause 11: The system of any of clauses 8-10, further comprising: a tube positioned within the structure, wherein a surface of the structure comprises the first color and the second color.
Clause 12: The system of any of clauses 8-11, wherein the structure comprises a first component and a second component, and wherein the structure is configured to hold the tube between the first component and the second component.
Clause 13: The system of any of clauses 8-12, wherein the at least one processor is further programmed or configured to: cause light to illuminate the tube via the at least one light source prior to causing the image of the tube to be captured via an image capture device, wherein the at least one light source comprises a spot light and a ring light.
Clause 14: The system of any of clauses 8-13, wherein the first color of the background is white and wherein the second color of the background is black.
Clause 15: The system of any of clauses 8-14, wherein the tube is a syringe.
Clause 16: A system for inspecting aspects of a medical device, comprising: a structure configured to a hold a medical device for inspection; an image capture device; and at least one processor programmed or configured to: cause an image of a tube to be captured via the image capture device when the tube is positioned in the structure, wherein the image comprises an image of a flange of the tube superimposed on a background, wherein the background comprises a first color and a second color; determine a measurement of an attribute of the flange of the tube; and provide data associated with the measurement of an attribute of the flange of the tube.
Clause 17: The system of clause 16, wherein the image capture device is positioned to capture the image of the tube when the flange of the tube is illuminated via at least one light source, wherein the at least one light source comprises a spot light and a ring light.
Clause 18: The system of clause 16 or 17, further comprising: a tube positioned within a structure, wherein a surface of the structure comprises the first color and the second color.
Clause 19: The system of any of clauses 16-18, wherein the structure comprises a first component and a second component, and wherein the structure is configured to hold the tube between the first component and the second component.
Clause 20: The system of any of clauses 16-19, wherein the first color of the background is white and wherein the second color of the background is black.

### BRIEF DESCRIPTION OF THE DRAWINGS

Additional advantages and details are explained in greater detail below with reference to the exemplary embodiments that are illustrated in the accompanying schematic figures, in which:
FIG. 1 is a diagram of a non-limiting embodiment or aspect of an environment in which methods and/or systems, described herein, may be implemented according to the principles of the presently disclosed subject matter;
FIG. 2 is a diagram of a non-limiting embodiment of components of one or more devices and/or one or more systems of FIG. 1;
FIG. 3 is a flowchart of a non-limiting embodiment of a process for visually inspecting a medical device;
FIG. 4A is a perspective view of a non-limiting embodiment of a structure for an inspection system;
FIG. 4B is a front view of a non-limiting embodiment of a structure for an inspection system;
FIG. 5 is a diagram of a non-limiting embodiment of a medical device used in an inspection system;
FIG. 6A is a diagram of a non-limiting embodiment of an implementation of an inspection system;
FIG. 6B is a diagram of a non-limiting embodiment of another implementation of an inspection system; and
FIGS. 7A and 7B are views of a non-limiting embodiment of captured images of an inspection system.

### DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

For purposes of the description hereinafter, the terms "end," "upper," "lower," "right," "left," "vertical," "horizontal," "top," "bottom," "lateral," "longitudinal," and derivatives thereof shall relate to embodiments or aspects as they are oriented in the drawing figures. However, it is to be understood that embodiments or aspects may assume various alternative variations and step sequences, except where expressly specified to the contrary. It is also to be understood that the specific devices and processes illustrated in the attached drawings, and described in the following specification, are simply non-limiting exemplary embodiments or aspects. Hence, specific dimensions and other physical characteristics related to the embodiments or aspects of the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items, and may be used interchangeably with "one or more" and "at least one." As used in the specification and the claims, the singular form of "a," "an," and "the" include plural referents, such as unless the context clearly dictates otherwise. Additionally, Furthermore, as used herein, the terms "set" and "group" are intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "has," "have," "having," or the like are intended to be openended terms. Further, the phrase "based on" is intended to mean "based at least partially on" unless explicitly stated otherwise. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.

As used herein, the terms "communication" and "communicate" may refer to the reception, receipt, transmission, transfer, provision, and/or the like of information (e.g., data, signals, messages, instructions, commands, and/or the like). For one unit (e.g., a device, a system, a component of a device or system, combinations thereof, and/or the like) to be in communication with another unit means that the one unit is able to directly or indirectly receive information from and/or send (e.g., transmit) information to the other unit. This may refer to a direct or indirect connection that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and transmits the processed information to the second unit. In some non-limiting embodiments or aspects, a message may refer to a network packet (e.g., a data packet and/or the like) that includes data.

Some non-limiting embodiments or aspects may be described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Provided are improved devices, systems, methods and computer program products for inspecting a flange and/or internal diameter of a medical device. Embodiments of the present disclosure may include an inspection system that includes a structure, an image capture device, and at least one processor in communication with the image capture device, wherein the at least one processor is programmed or configured to cause an image of a tube to be captured via the image capture device when a tube is positioned in the structure, wherein the image comprises an image of a flange of the tube superimposed on a background, wherein the background comprises a first color and a second color, determine a measurement of an attribute of the flange of the tube, and provide data associated with the measurement of an attribute of the flange of the tube. In some non-limiting embodiments or aspects, a surface of the structure may include the first color and the second color.

In some non-limiting embodiments, the at least one processor is further programmed or configured to perform an edge detection procedure on the image of the flange of the tube to provide a defined edge of the flange of the tube, wherein determining the measurement of the attribute of the flange of the tube includes determining the measurement of the attribute of the flange of the tube based on the defined edge of the flange of the tube. In some non-limiting embodiments or aspects, the at least one processor is further programmed or configured to cause light to illuminate the tube via at least one light source prior to causing the image of the tube to be captured via an image capture device, wherein the at least one light source comprises a spot light and a ring light.

In this way, embodiments of the present disclosure allow for an inspection system that may accurately detect particular aspects of a medical device, such as a tube, a syringe, and/or the like, from an image. For example, the inspection system may be able to determine the presence of defects and/or more accurately detect an internal diameter of the medical device to ensure proper inspection of the medical device.

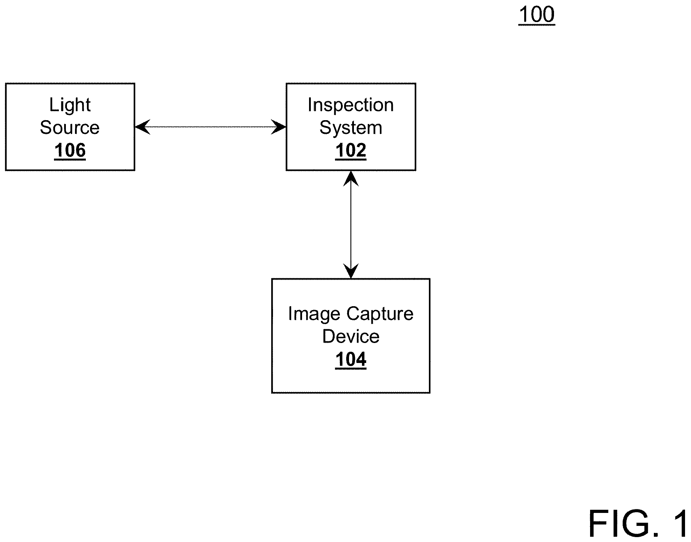

Referring now to FIG. 1, FIG. 1 is a diagram of a non-limiting embodiment or aspect of an environment 100 in which methods and/or systems, as described herein, may be implemented. As shown in FIG. 1, environment 100 may include inspection system 102, image capture device 104, and light source 106. Inspection system 102, image capture device 104, and light source 106 may interconnect (e.g., establish a connection to communicate, and/or the like) via wired connections, wireless connections, or a combination of wired and wireless connections. In some non-limiting embodiments, inspection system 102 may include one or more of image capture device 104, and/or light source 106.

In some non-limiting embodiments, inspection system 102 may include one or more devices capable of receiving information from and/or communicating information to image capture device 104, and/or light source 106. For example, inspection system 102 may include a computing device, such as a processor, a server, a group of servers, and/or other like devices. Inspection system 102 may be capable of sending signals to image capture device 104 and/or light source 106 and inspection system 102 may be capable of receiving data and/or signals from image capture device 104 and/or light source 106.

In some non-limiting embodiments, image capture device 104 may include a camera. Image capture device 104 may be capable of capturing static pictures and/or dynamic pictures (e.g., video). In some non-limiting embodiments, image capture device 104 may be capable of receiving information from and/or communicating information to inspection system 102. For example, image capture device 104 may be capable of receiving signals from inspection system 102 and/or may be capable of sending signals and/or data to inspection system 102.

In some non-limiting embodiments, light source 106 may include a spot light and/or a ring light. Light source 106 may be adjusted such that light source 106 may illuminate one or more parts of inspection system 102. In some non-limiting embodiments, light source 106 may be capable of receiving information from and/or communicating information to inspection system 102. For example, light source 106 may be capable of receiving signals from inspection system 102 and/or may be capable of sending signals and/or data to inspection system 102. In some non-limiting embodiments, light source 106 may include one or more light sources (e.g., one or more spot lights and/or one or more ring lights).

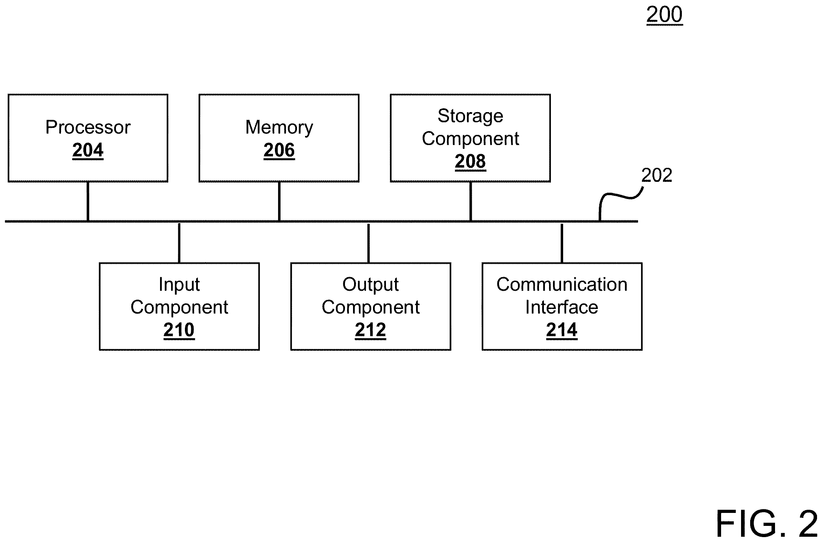

Referring now to FIG. 2, FIG. 2 is a diagram of example components of device 200. Device 200 may correspond to inspection system 102, image capture device 104, light source 106, and/or one or more components of inspection system 102. In some non-limiting embodiments, inspection system 102, image capture device 104, and/or light source 106 may include at least one device 200 and/or at least one component of device 200. As shown in FIG. 2, device 200 may include bus 202, processor 204, memory 206, storage component 208, input component 210, output component 212, and communication interface 214.

Bus 202 may include a component that permits communication among the components of device 200. In some non-limiting embodiments, processor 204 may be implemented in hardware, software, or a combination of hardware and software. For example, processor 204 may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed to perform a function. Memory 206 may include random access memory (RAM), read-only memory (ROM), and/or another type of dynamic or static storage device (e.g., flash memory, magnetic memory, optical memory, etc.) that stores information and/or instructions for use by processor 204.

Storage component 208 may store information and/or software related to the operation and use of device 200. For example, storage component 208 may include a hard disk (e.g., a magnetic disk, an optical disk, a magneto-optic disk, a solid state disk, etc.), a compact disc (CD), a digital versatile disc (DVD), a floppy disk, a cartridge, a magnetic tape, and/or another type of computer-readable medium, along with a corresponding drive.

Input component 210 may include a component that permits device 200 to receive information, such as via user input (e.g., a touchscreen display, a keyboard, a keypad, a mouse, a button, a switch, a microphone, a camera, etc.). Additionally or alternatively, input component 210 may include a sensor for sensing information (e.g., a global positioning system (GPS) component, an accelerometer, a gyroscope, an actuator, etc.). Output component 212 may include a component that provides output information from device 200 (e.g., a display, a speaker, one or more light-emitting diodes (LEDs), etc.).

Communication interface 214 may include a transceiver-like component (e.g., a transceiver, a separate receiver and transmitter, etc.) that enables device 200 to communicate with other devices, such as via a wired connection, a wireless connection, or a combination of wired and wireless connections. Communication interface 214 may permit device 200 to receive information from another device and/or provide information to another device. For example, communication interface 214 may include an Ethernet interface, an optical interface, a coaxial interface, an infrared interface, a radio frequency (RF) interface, a universal serial bus (USB) interface, a Wi-Fi^{®} interface, a Bluetooth^{®} interface, a Zigbee^{®} interface, a cellular network interface, and/or the like.

Device 200 may perform one or more processes described herein. Device 200 may perform these processes based on processor 204 executing software instructions stored by a computer-readable medium, such as memory 206 and/or storage component 208. A computer-readable medium (e.g., a non-transitory computer-readable medium) is defined herein as a non-transitory memory device. A non-transitory memory device includes memory space located inside of a single physical storage device or memory space spread across multiple physical storage devices.

Software instructions may be read into memory 206 and/or storage component 208 from another computer-readable medium or from another device via communication interface 214. When executed, software instructions stored in memory 206 and/or storage component 208 may cause processor 204 to perform one or more processes described herein. Additionally or alternatively, hardwired circuitry may be used in place of or in combination with software instructions to perform one or more processes described herein. Thus, embodiments or aspects described herein are not limited to any specific combination of hardware circuitry and software.

Memory 206 and/or storage component 208 may include data storage or one or more data structures (e.g., a database and/or the like). Device 200 may be capable of receiving information from, storing information in, communicating information to, or searching information stored in the data storage or one or more data structures in memory 206 and/or storage component 208. For example, the information may include input data, output data, image data, measurement data, or any combination thereof.

The number and arrangement of components shown in FIG. 2 are provided as an example. In some non-limiting embodiments, device 200 may include additional components, fewer components, different components, or differently arranged components than those shown in FIG. 2. Additionally or alternatively, a set of components (e.g., one or more components) of device 200 may perform one or more functions described as being performed by another set of components of device 200.

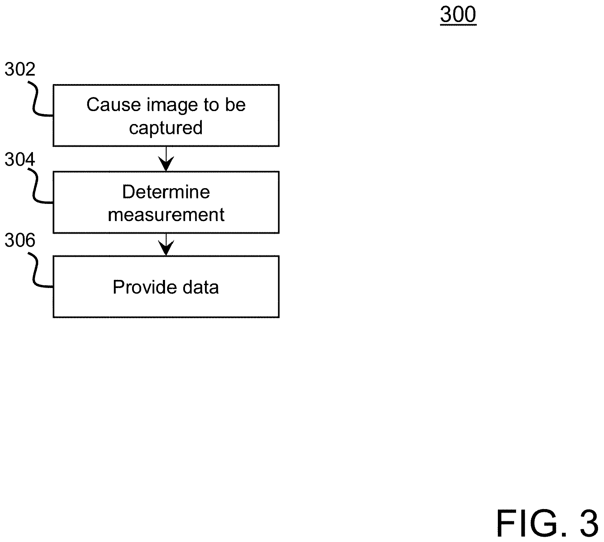

Referring now to FIG. 3, FIG. 3 is a flowchart of a non-limiting embodiment or aspect of process 300 for inspecting aspects of a medical device. In some non-limiting embodiments, one or more of the functions described with respect to process 300 may be performed (e.g., completely, partially, etc.) by inspection system 102. In some non-limiting embodiments, one or more of the steps of process 300 may be performed (e.g., completely, partially, and/or the like) by another device or a group of devices separate from and/or including inspection system 102, such as image capture device 104, and/or light source 106.

As shown in FIG. 3, at step 302, process 300 may include causing an image to be captured. For example, inspection system 102 may cause an image to be captured with image capture device 104. In some non-limiting embodiments, the image associated with image capture device 104 may include an image of a flange of a tube (e.g., syringe) superimposed on a background. In some non-limiting embodiments, the image associated with image capture device 104 may include an axial (e.g., cross-sectional) view of the tube superimposed on a background. In some non-limiting embodiments, the background may include a first color and a second color. In some non-limiting embodiments, the first color may be white and the second color may be black.

In some non-limiting embodiments, inspection system 102 may store the image as image data that is determined (e.g., measured, detected, sensed, obtained, etc.) by inspection system 102 in the course of operation of inspection system 102.

As shown in FIG. 3, at step 304, process 300 may include determining a measurement. For example, inspection system 102 may determine a measurement associated with the flange of the tube based on the image captured by image capture device 104. In some non-limiting embodiments, inspection system 102 may determine a measurement of an attribute of the flange of the tube. For example, inspection system 102 may determine the measurement of an internal diameter of the flange of the tube. In some non-limiting embodiments, inspection system 102 may determine a measurement of an attribute of the tube. In some non-limiting embodiments, inspection system 102 may perform an inspection on the tube after the tube is positioned within a structure where the surface of the structure includes the first color and the second color.

In some non-limiting embodiments, determining the measurement of the attribute of the flange of the tube may include determining the measurement of the attribute of the flange of the tube based on the defined edge of the flange of the tube.

In some non-limiting embodiments, inspection system 102 may determine the measurement associated with the flange of the tube by analyzing the image and/or image data captured by image capture device 104.

As shown in FIG. 3, at step 306, process 300 may include providing data. For example, inspection system 102 may provide data associated with the measurement of an attribute of the flange of the tube. In some non-limiting embodiments, the data associated with the measurement of an attribute may include a value of an internal diameter of the flange of the tube.

In some non-limiting embodiments, inspection system 102 may cause light to illuminate the tube via at least one light source (e.g., light source 106) prior to causing the image of the tube to be captured via image capture device 104. In some non-limiting embodiments, the at least one light source may include a spot light and/or a ring light. In some non-limiting embodiments, light source 106 may include one or more light sources (e.g., one or more spot lights and/or one or more ring lights).

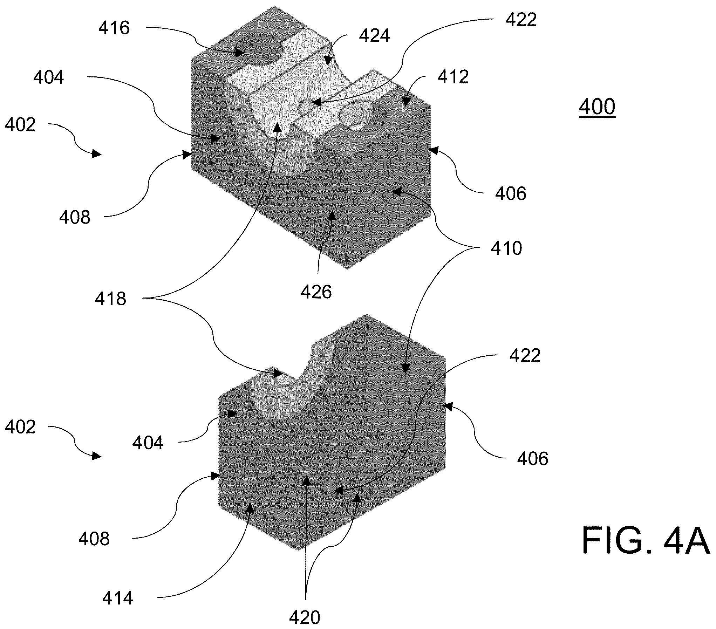

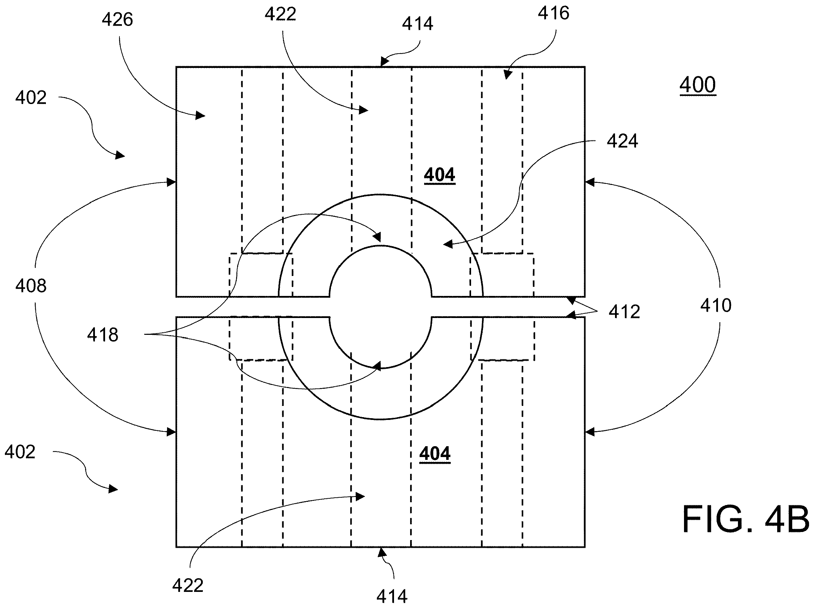

With regard to FIGS. 4A and 4B, FIGS. 4A and 4B show a perspective view of a non-limiting embodiment of a structure and a front view of a non-limiting embodiment of a structure for inspection system 102. Inspection system 102 may include a structure according to non-limiting embodiments of the present disclosure.

Referring now to FIG. 4A, FIG. 4A is a perspective view of a non-limiting embodiment of a structure 400 for an inspection system. As shown in FIG. 4A, structure 400 may include at least two support blocks 402. In some non-limiting embodiments, structure 400 may be configured to hold a tube between a first support block 402 and a second support block 402.

In some non-limiting embodiments, support block 402 may include front surface 404, back surface 406, first side surface 408, second side surface 410, top surface 412, bottom surface 414, bored holes 416, cutouts 418, fastener holes 420, through hole 422, first color 424, and second color 426. In some non-limiting embodiments, a first portion of support block 402 may include first color 424 and a second portion of support block 402 may include second color 426.

In some non-limiting embodiments, front surface 404 may include first color 424 and second color 426. In some non-limiting embodiments, front surface 404 may be a background in an image of a flange superimposed on the background. In some non-limiting embodiments, back surface 406 and top surface 412 may include first color 424 and second color 426. In some non-limiting embodiments, first side surface 408, second side surface 410, and bottom surface may include second color 426. In some non-limiting embodiments, front surface 404 may include a length equal to 30 millimeters (mm) and a width equal to 16.3 mm. In some non-limiting embodiments, front surface 404 may include a length up to 16 mm. In some non-limiting embodiments, back surface 406 may include a length equal to the length of front surface 404 and a width equal to the width of front surface 404.

In some non-limiting embodiments, first side surface 408 may include a length equal to 16.3 mm and a width equal to 16 mm. In some non-limiting embodiments, first side surface 408 may include a length up to 18 mm. In some non-limiting embodiments, second side surface 410 may include a length equal to the length of first side surface 408 and a width equal to the width of first side surface 408.

In some non-limiting embodiments, top surface 412 may include one or more bored holes 416 and cutout 418. In some non-limiting embodiments, bored hole 416 may be configured to accept a fastener. In some non-limiting embodiments, cutout 418 may include a cylindrical cutout, a semi-cylindrical cutout, a square cutout, or another shape such that cutout 418 may be configured to accept a tube or other object positioned within the space defined by cutout 418. In some non-limiting embodiments, cutout 418 may include a diameter equal to 8.26 mm. In some non-limiting embodiments, cutout 418 may extend from front surface 404 to back surface 406. In some non-limiting embodiments, cutout 418 may accept a tube when at least one first cutout 418 is merged with at least one second cutout 418 when two support blocks 402 are brought together such that top surfaces 412 of each support block 402 contact each other. In some non-limiting embodiments, cutout 418 may include through-hole 422. In some non-limiting embodiments, cutout 418 may include first color 424.

In some non-limiting embodiments, top surface 412 may include a length equal to 30 mm and a width equal to 16 mm. In some non-limiting embodiments, bottom surface 414 may include a length equal to the length of top surface 412 and a width equal to the width of top surface 412.

In some non-limiting embodiments, bottom surface 414 may include one or more fastener holes 420 and through-hole 422. In some non-limiting embodiments, fastener hole 420 may be configured to accept a fastener. In some non-limiting embodiments, through-hole 422 may extend from top surface 412 through support block 402 to bottom surface 414.

In some non-limiting embodiments, bored hole 416 may include a first hole including a first diameter and a bore including a bore depth and a bore diameter. In some non-limiting embodiments, the first hole may include a first diameter equal to 3.4 millimeters (mm). In some non-limiting embodiments, the bore may include a bore depth equal to 3.4 mm and a bore diameter equal to 6.5 mm.

In some non-limiting embodiments, fastener hole 420 may include a countersink equal to 90 degrees and having a depth of 1 mm. In some non-limiting embodiments, fastener hole 420 may include a first hole portion including a depth equal to 7.3 mm and a diameter equal to 2.4 mm. In some non-limiting embodiments, fastener hole 420 may include a second hole portion including a depth between 3 mm and 4.48 mm. The depth of the second hole portion may be measured from the deepest point of the first hole portion. For example, fastener hole 420 may have a total depth of 10.3 mm to 11.8 mm. In some non-limiting embodiments, the second hole portion may be threaded in order to accept a threaded fastener.

In some non-limiting embodiments, through hole 422 may include a total depth equal to the length of support block 402 (e.g., the length of front surface 404, back surface 406, first side surface 408, and/or second side surface 410. In some non-limiting embodiments, through hole 422 may include a diameter of 3.5 mm.

In some non-limiting embodiments, bored holes 416 may be located along the center line of the width of top surface 412 and bottom surface 414 of support block 402. Alternatively, bored holes 416 may be located offset from the center line of the width of top surface 412 and bottom surface 414. For example, bored holes 416 may be located 12 mm away from the edge of front surface 404 and 4 mm away from the edge of back surface 406 where the length of top surface 412 and bottom surface 414 is 16 mm (e.g., the center line of the width is located at 8 mm from the edge of top surface 412 and bottom surface 414). In some non-limiting embodiments, a first support block 402 may have bored holes 416 offset from the center line of the width of top surface 412 and bottom surface 414 and a second support block 402 may have bored holes 416 located along the center line of the width of top surface 412 and bottom surface 414.

In some non-limiting embodiments, bottom surface 414 may include one fastener hole 420. In some non-limiting embodiments, fastener holes 420 may be located along the center line of the width of top surface 412 and bottom surface 414 of support block 402. Alternatively, fastener holes 420 may be located offset from the center line of the width of top surface 412 and bottom surface 414. For example, fastener holes 420 may be located 12 mm away from the edge of front surface 404 and 4 mm away from the edge of back surface 406 where the length of top surface 412 and bottom surface 414 is 16 mm (e.g., the center line of the width is located at 8 mm from the edge of top surface 412 and bottom surface 414). In some non-limiting embodiments, further fastener holes may be located 12 mm away from the edge of bottom surface 414 and 4 mm away from the edge of top surface 412. In some non-limiting embodiments, a first support block 402 may have fastener holes 420 offset from the center line of the width of top surface 412 and bottom surface 414 and a second support block 402 may have fastener holes 420 located along the center line of the width of top surface 412 and bottom surface 414.

In some non-limiting embodiments, through hole 422 may be located along the center line of the width of top surface 412 and bottom surface 414 of support block 402. Alternatively, through-hole 422 may be located offset from the center line of the width of top surface 412 and bottom surface 414. For example, through-hole 422 may be located 12 mm away from the edge of front surface 404 and 4 mm away from the edge of back surface 406 where the length of top surface 412 and bottom surface 414 is 16 mm (e.g., the center line of the width is located at 8 mm from the edge of top surface 412 and bottom surface 414). In some non-limiting embodiments, a first support block 402 may have through-hole 422 offset from the center line of the width of top surface 412 and bottom surface 414 and a second support block 402 may have through-hole 422 located along the center line of the width of top surface 412 and bottom surface 414.

In some non-limiting embodiments, first color 424 may include white and/or a light color (e.g., off-white, yellow, tan, etc.). In some non-limiting embodiments, the first portion of support block 402 that includes first color 424 may be less than (e.g., less area, less volume, etc.) the second portion of support block 402 that includes second color 426. In some non-limiting embodiments, the first portion of support block 402 that includes first color 424 may be made from polyoxymethylene (POM).

In some non-limiting embodiments, first color 424 may cover the surface area of cutout 418. In some non-limiting embodiments, first color 424 may extend beyond the area of cutout 418 linearly forming an area that is rectangular in shape on top surface 412 adjacent to the surface area of cutout 418 and first color 424 may extend beyond the area of cutout 418 radially forming an area that is circular in shape on front surface 404 and back surface 406. For example, first color 424 may extend 4.9 mm beyond the area of cutout 418 onto top surface 412 on each side of the area of cutout 418 forming a rectangular area of first color 424 on top surface 412. First color 424 may extend in a 4.9 mm radial direction beyond the area of cutout 418 onto front surface 404 and back surface 406 forming a radial (e.g. circular, annular, etc.) area of first color 424 on front surface 404 and back surface 406.

In some non-limiting embodiments, second color 426 may include black and/or a dark color (e.g., dark blue, dark brown, etc.). In some non-limiting embodiments, the second portion of support block 402 that includes second color 426 may be greater than (e.g., greater area, greater volume, etc.) the first portion of support block 402 that includes first color 424. In some non-limiting embodiments, the second portion of support block 402 that includes second color 426 may be made from POM.

Referring now to FIG. 4B, FIG. 4B is a front view of a non-limiting embodiment of structure 400 for an inspection system. As shown in FIG. 4B, structure 400 may include at least two support blocks 402. In some non-limiting embodiments, support block 402 may include front surface 404, first side surface 408, second side surface 410, top surface 412, bottom surface 414, bored holes 416, cutouts 418, fastener holes 420, through hole 422, first color 424, and second color 426. In some non-limiting embodiments, a first portion of support block 402 may include first color 424 and a second portion of support block 402 may include second color 426.

As further shown in FIG. 4B, each top surface 414 of each support block 402 is brought together such that top surfaces 412 of each support block 402 contact each other. As shown in FIG. 4B, when a first top surface 412 of each support block 402 is in contact with a second top surface 412, cutouts 418 merge together to form an opening which may be configured to accept a tube. In some non-limiting embodiments, front view of structure 400 (e.g. one or more front surfaces 404) may be a background in an image of a flange where the flange is superimposed on the background.

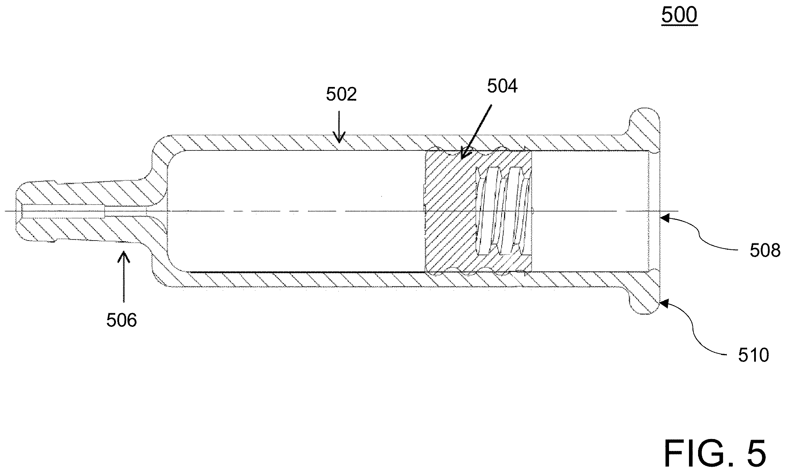

Referring now to FIG. 5, FIG. 5 is a diagram of a non-limiting embodiment of a medical device 500. In some non-limiting embodiments or aspects, medical device 500 may include tube 502, elastomeric stopper 504, distal end 506, proximal end 508, and flange 510. In some non-limiting embodiments or aspects, tube 502 may include a barrel of a syringe, and/or the like. Tube 502 may be made of glass and/or plastic (e.g., glass and/or plastic suitable for medical applications). In some non-limiting embodiments or aspects, elastomeric stopper 504 may be made of an elastomeric material and may be adapted to be connected to medical device 500 (e.g., connected to a plunger rod of medical device 500, and/or the like). In some non-limiting embodiments or aspects, distal end 506 may be adapted to be connected to another medical device (e.g., a needle, cap, catheter, stacked needle, and/or the like). In some non-limiting embodiments or aspects, proximal end 508 may include flange 510 and may be configured to receive elastomeric stopper 504.

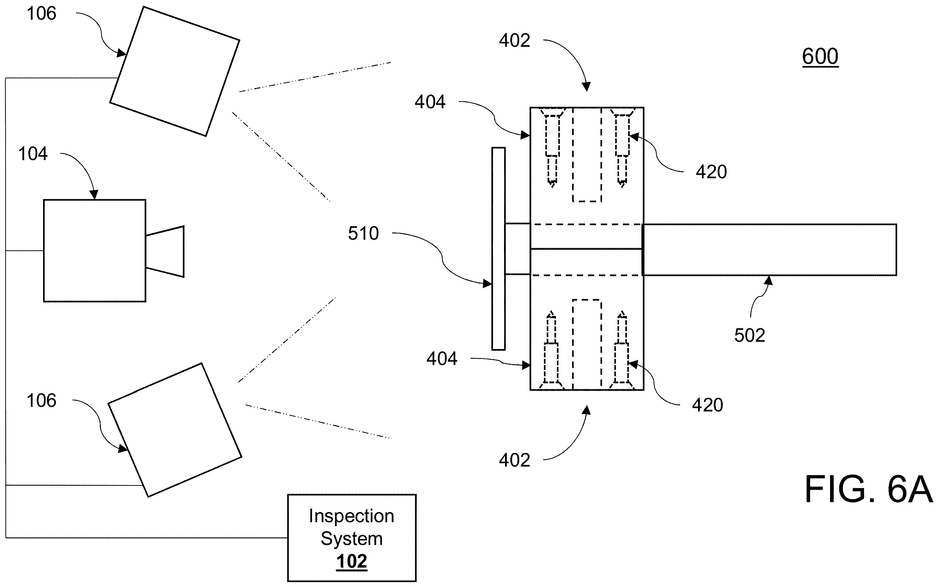

Referring now to FIG. 6A, FIG. 6A is a diagram of a non-limiting embodiment of an implementation 600 of inspection system 102. As shown in FIG. 6A, implementation 600 may include inspection system 102, image capture device 104, light source 106, support blocks 402, and tube 502. In some non-limiting embodiments, support blocks 402 may include fastener holes 420. In some non-limiting embodiments, fastener holes 420 may be used for mounting support blocks 402.

In some non-limiting embodiments, support blocks 402 may be configured such that support blocks 402 may support tube 502 for inspection. In some non-limiting embodiments, tube 502 may include part of medical device 500 (e.g., a barrel of a syringe). Tube 502 may include at least one flange 510. Inspection system 102 may inspect flange 510 of tube 502. In some non-limiting embodiments, tube 502 may be positioned within support blocks 402. In some non-limiting embodiments, front surfaces 404 of support blocks 402 may include first color 424 and second color 426.

Light source 106 may be positioned such that light source 106 may illuminate flange 510 of tube 502. In some non-limiting embodiments, light source 106 may be integrated with image capture device 104 and/or inspection system 102. In some non-limiting embodiments, light source 106 may be separate from image capture device 104 and/or inspection system 102. In some non-limiting embodiments, light source 106 may be positioned in between image capture device 104 and tube 502 such that light source 106 may illuminate flange 510 of tube 502 without obstructing a line of sight from image capture device 104 to tube 502.

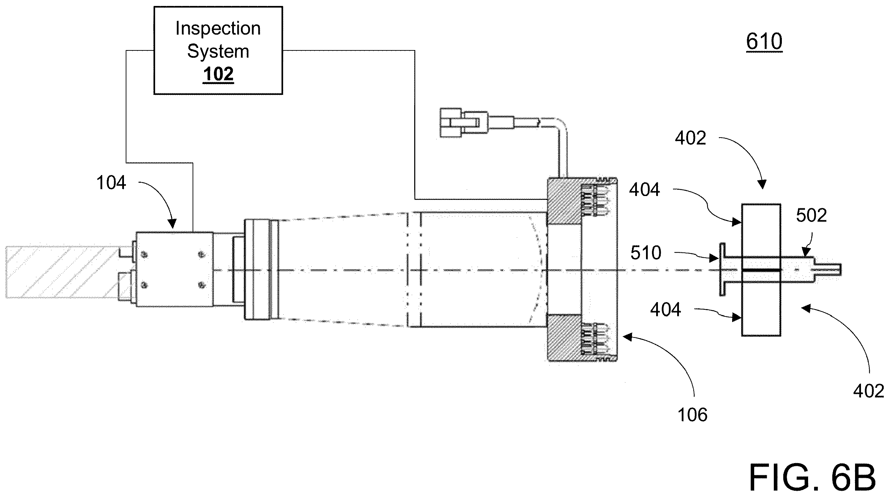

Referring now to FIG. 6B, FIG. 6B is a diagram of a non-limiting embodiment of another implementation 610 of inspection system 102. As shown in FIG. 6B, implementation 610 may include inspection system 102, image capture device 104, light source 106, support blocks 402, and tube 502. In some non-limiting embodiments, inspection system 102 may include one or more of image capture device 104, light source 106, support blocks 402, and/or tube 502. In some non-limiting embodiments, implementation 610 may include a lens positioned between image capture device 104 and light source 106.

In some non-limiting embodiments, support blocks 402 may be configured such that support blocks 402 may support tube 502 for inspection. In some non-limiting embodiments, tube 502 may include part of medical device 500 (e.g., a barrel of a syringe). Tube 502 may include at least one flange 510. Inspection system 102 may inspect flange 510 of tube 502. In some non-limiting embodiments, tube 502 may be positioned within support blocks 402. In some non-limiting embodiments, front surfaces 404 of support blocks 402 may include first color 424 and second color 426.

Light source 106 may be positioned such that light source 106 may illuminate flange 510 of tube 502. In some non-limiting embodiments, light source 106 may be integrated with image capture device 104 and/or inspection system 102. In some non-limiting embodiments, light source 106 may be separate from image capture device 104 and/or inspection system 102. In some non-limiting embodiments, light source 106 may be positioned in between image capture device 104 and tube 502 such that light source 106 may illuminate flange 510 of tube 502 without obstructing a line of sight from image capture device 104 to tube 502. In some non-limiting embodiments, light source 106 may be positioned on the same axis as image capture device 104. In some non-limiting embodiments, light source 106 may share a line of sight with image capture device 104 and may be positioned toward tube 502 in the same direction as image capture device 104.

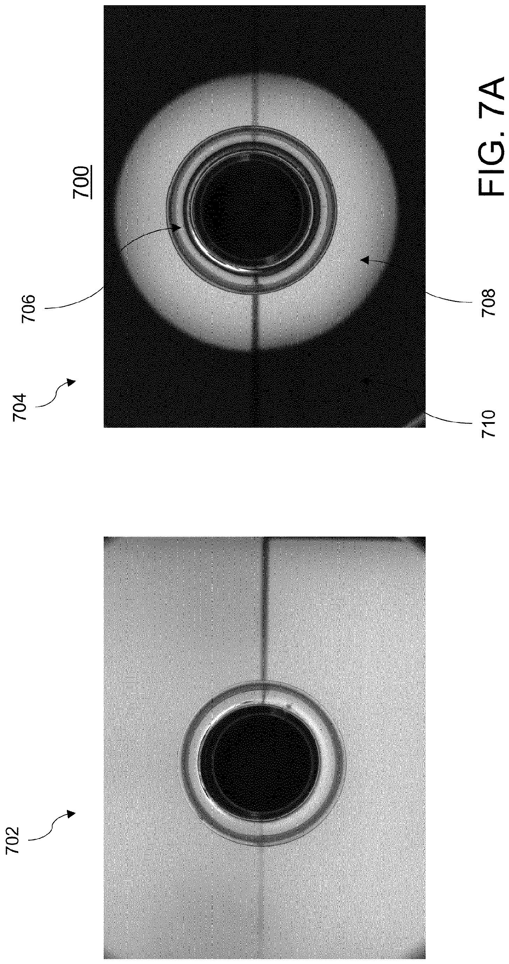

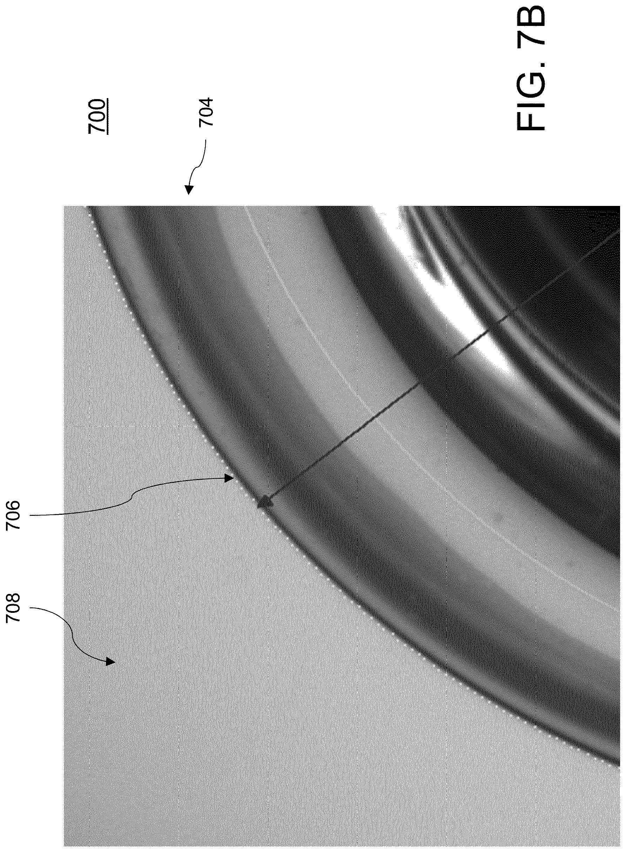

With regard to each of FIGS. 7A and 7B, as shown in FIGS. 7A and 7B, views of a non-limiting embodiment of captured images of an inspection system show an axial view (e.g., cross-sectional view) of a tube superimposed on different backgrounds in FIG. 7A, and a tube superimposed on a background with measurements of attributes of a flange of the tube being determined in FIG. 7B.

Referring now to FIG. 7A, shown is a view of a non-limiting embodiment of a comparison of images 700. Comparison of images 700 includes first captured image 702 and second captured image 704. First captured image 702 may include a background that is one color. As shown in FIG. 7A, first captured image 702 includes a tube superimposed on a fully white background. In this way, second captured image 704 may include a greater amount of contrast as compared to first captured image 702, which allows for an inspection system (e.g., inspection system 102) to more easily and accurately determine a measurement of an attribute of a tube, such as a diameter of a flange of the tube. In some non-limiting embodiments, second captured image 704 may represent an image that may be captured by inspection systems according to non-limiting embodiments of the present disclosure.

In some non-limiting embodiments, second captured image 704 may include a tube superimposed on a background. In some non-limiting embodiments, the background of second captured image 704 may include first color 708 and a second color 710. In some non-limiting embodiments, first color 708 may include white and second color 710 may include black. As shown in second captured image 704 of FIG. 7A, first color 708 may surround the tube in second captured image 704 and second color 710 may surround first color 708. As shown in second captured image 704 of FIG. 7A, first color 708 may form an annulus and/or circular area around the tube. It is to be understood that the shape formed by first color 708 in second captured image 704 may include any shape such that first color 708 surrounds the tube and such that second color 710 surrounds first color 708.

As further shown in second captured image 704 of FIG. 7A, inspection system 102 may cause second captured image 704 to be captured. In some non-limiting embodiments, second captured image 704 may include first color 708 and second color 710. In some non-limiting embodiments, second captured image 704 may display edge 706 of an internal diameter of a flange of the tube in second captured image 704. In some non-limiting embodiments, edge 706 may appear clearer in second captured image 704 when compared to an edge of an internal diameter of a flange of the tube in first captured image 702.

Referring now to FIG. 7B, FIG. 7B is a close-up view of a non-limiting embodiment of second captured image 704 of an inspection system (e.g., inspection system 102) from comparison of images 700. As shown in FIG. 7B, second captured image 704 may include first color 708 and edge 706. In some non-limiting embodiments, inspection system 102 may perform an edge detection procedure on second captured image 704 of the flange of the tube to provide a defined edge of the flange of the tube. For example, inspection system 102 may perform an edge detection procedure on second captured image 704 by determining a measurement of an attribute of the flange of the tube such as the measurement of a diameter (e.g., an internal diameter or an external diameter) of the flange of the tube based on edge 706.

Although embodiments or aspects have been described in detail for the purpose of illustration and description, it is to be understood that such detail is solely for that purpose and that embodiments or aspects are not limited to the disclosed embodiments or aspects, but, on the contrary, are intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect. In fact, many of these features can be combined in ways not specifically recited in the claims and/or disclosed in the specification. Although each dependent claim listed below may directly depend on only one claim, the disclosure of possible implementations includes each dependent claim in combination with every other claim in the claim set.

## Claims

1. A method for inspecting aspects of a medical device comprising:
causing, with at least one processor, an image of a tube to be captured via an image capture device, wherein the image comprises an image of a flange of the tube superimposed on a background, wherein the background comprises a first color and a second color;
determining, with at least one processor, a measurement of an attribute of the flange of the tube; and
providing, with at least one processor, data associated with the measurement of an attribute of the flange of the tube.

2. The method of claim 1, further comprising:
performing an edge detection procedure on the image of the flange of the tube to provide a defined edge of the flange of the tube;
wherein determining the measurement of the attribute of the flange of the tube comprises:
determining the measurement of the attribute of the flange of the tube based on the defined edge of the flange of the tube.

3. The method of claim 1 or 2, further comprising:
positioning the tube within a structure, wherein a surface of the structure comprises the first color and the second color.

4. The method of claim 3, wherein the structure comprises a first component and a second component, and wherein the structure is configured to hold the tube between the first component and the second component.

5. The method of any of claims 1-4, further comprising:
causing light to illuminate the tube via at least one light source prior to causing the image of the tube to be captured via an image capture device, wherein the at least one light source comprises a spot light and a ring light.

6. The method of any of claims 1-5, wherein the first color of the background is white and wherein the second color of the background is black.

7. The method of any of claims 1-6, wherein the tube is a syringe.

8. A system for inspecting aspects of a medical device, comprising:
a structure configured to a hold a tube for inspection; and
at least one processor programmed or configured to:
cause an image of a tube to be captured via an image capture device when the tube is positioned in the structure, wherein the image comprises an image of a flange of the tube superimposed on a background, wherein the background comprises a first color and a second color;
determine a measurement of an attribute of the flange of the tube; and
provide data associated with the measurement of an attribute of the flange of the tube.

9. The system of claim 8, further comprising:
at least one light source, wherein the at least one light source is configured to illuminate the flange of the tube.

10. The system of claim 8 or 9, wherein the at least one processor is further programmed or configured to:
perform an edge detection procedure on the image of the flange of the tube to provide a defined edge of the flange of the tube;
wherein, when determining the measurement of the attribute of the flange of the tube, the at least one processor is programmed or configured to:
determine the measurement of the attribute of the flange of the tube based on the defined edge of the flange of the tube.

11. The system of any of claims 8-10, further comprising:
a tube positioned within the structure, wherein a surface of the structure comprises the first color and the second color.

12. The system of any of claims 8-11, wherein the structure comprises a first component and a second component, and wherein the structure is configured to hold the tube between the first component and the second component.

13. The system of claim 9, wherein the at least one processor is further programmed or configured to:
cause light to illuminate the tube via the at least one light source prior to causing the image of the tube to be captured via an image capture device, wherein the at least one light source comprises a spot light and a ring light.

14. The system of any of claims 8-13, wherein the first color of the background is white and wherein the second color of the background is black.

15. The system of any of claims 8-14, wherein the tube is a syringe.
